# EUROPÄISCHE PATENTSCHRIFT

(11) **EP 1 728 683 B1**
(45) Veröffentlichungstag und Bekanntmachung des Hinweises auf die Patenterteilung: **13.04.2011**
(21) Anmeldenummer: 06009614.6
(22) Anmeldetag: 10.05.2006
(51) Int. Cl.: B60R 5/04

(54) **Kofferraum eines Kraftfahrzeuges**
Vehicle boot
Coffre d'un véhicule

(30) Priorität: 01.06.2005 DE 102005026670
(43) Veröffentlichungstag der Anmeldung: 06.12.2006
(60) Teilanmeldung: 07017269.7
(73) Patentinhaber: BOS GmbH & Co. KG, 73760 Ostfildern (DE); Bayerische Motoren Werke Aktiengesellschaft, 80809 München (DE)
(72) Erfinder: Wokrinek, Michael, 84079 Bruckberg (DE); Haspel, Klaus, 72108 Rottenburg (DE)
(74) Vertreter: Patentanwälte Ruff, Wilhelm, Beier, Dauster & Partner

(56) Entgegenhaltungen:
- EP-A- 1 642 777
- US-A- 5 046 913
- US-A- 5 855 310
- US-A1- 2004 217 616

## Beschreibung

Die Erfindung betrifft einen Kofferraum eines Kraftfahrzeugs mit einer Stauvorrichtung, die mit einem zwischen einer Ruheposition und einer Stauposition durch Führungsmittel beweglich gelagerten Aufnahmebehältnis versehen ist, wobei die Führungsmittel und das Aufnahmebehältnis an einem Rahmenmodul angeordnet sind, das durch werkzeuglos bedienbare Befestigungsmittel lösbar an einem Wandungsabschnitt des Kofferraumes montierbar ist.

Ein derartiger Kofferraum mit einer Stauvorrichtung ist aus der US 585310 bekannt. Die bekannte Stauvorrichtung weist ein zweischaliges Aufnahmebehältnis auf, das fahrzeugfest und lösbar an einer Seitenwand eines Kofferraumes montierbar ist. In dem zweischaligen Aufnahmebehältnis ist ein Einsatz vorgesehen, der mit Aussparungen für die Halterung entsprechender Ausstattungsteile vorgesehen ist.

Die US 5046913 offenbart einen mittels Führungsschienenanordnungen an einem Laderaumboden verschiebbar gelagerten Lastboden, der durch eine Heckklappe des Kraftfahrzeugs hindurch nach außen ausgezogen werden kann, um eine Auffahrrampe für schwere Transportgegenstände zu bilden.

Aus der US 2004/0217616 A1 ist ein Laderaum für ein Kraftfahrzeug bekannt, dessen Seitenwandungen mit verschiedenen, austauschbaren Funktionsmodulen versehen sind.

Die EP 164277 A1 betrifft einen weiteren Laderaum für ein Kraftfahrzeug, in dessen Begrenzungswandungen Rahmenvertiefungen vorgesehen sind, in denen Funktionsmodule aufgenommen werden können.

Eine weitere Stauvorrichtung ist aus der DE 101 12 272 A1 bekannt. Das dort offenbarte Aufnahmebehältnis ist als Schublade ausgeführt, die linearbeweglich in Horizontalführungen zwischen einer Ruheposition und einer Stauposition, in der ein Be- oder Entladen der Schublade ermöglicht ist, verschiebbar angeordnet ist. Entsprechende Führungsschienen für das Schubladenteil sind fahrzeugfest im Kofferraum angeordnet.

Aus der DE 44 42 942 A1 ist eine weitere Stauvorrichtung für einen Kofferraum eines Personenkraftwagens bekannt, bei der ein Aufnahmebehältnis zwischen einer unter einer Hutablage angeordneten Ruheposition und einer in Richtung der Kofferraumöffnung verlagerten Stauposition beweglich angeordnet ist. Das Aufnahmebehältnis ist wannenartig ausgeführt und mit Hilfe von Parallelogrammlenkern zwischen der Stauposition und der Ruheposition parallel verlagerbar. Wenigstens eine Gasdruckfeder unterstützt die Verlagerungsbewegung aus der Ruheposition in die Stauposition, in der entsprechendes Staugut entnommen oder verstaut werden kann.

Aufgabe der Erfindung ist es, einen Kofferraum der eingangs genannten Art zu schaffen, der variable Einsatzmöglichkeiten ermöglicht.

Diese Aufgabe wird dadurch gelöst, dass als Wandungsabschnitt eine Deckwandung des Kofferraumes vorgesehen ist, wobei als Deckwandung ein fest in die Karosserierohbaustruktur integriertes Karosserieteil vorgesehen ist, das den Kofferraum nach oben zumindest abschnittsweise begrenzt, und an der das Rahmenmodul von unten her befestigbar ist, und dass die Führungsmittel als teleskopartig ausziehbare Führungsschienenanordnungen gestaltet sind. Dadurch ist es möglich, die gesamte Stauvorrichtung wahlweise im Kofferraum zu positionieren oder aus diesem zu entnehmen, so dass das Stauvolumen des Kofferraumes je nach Art des zu transportierenden Staugutes verändert werden kann. Die werkzeuglos lösbaren oder befestigbaren Befestigungsmittel ermöglichen eine äußerst einfache Montage und Demontage des Rahmenmoduls, so dass eine Montage oder Demontage nicht ausschließlich durch eine Fahrzeugfachwerkstatt, sondern auch durch die Fahrzeugendkunden erfolgen kann. Das Rahmenmodul gewährleistet eine hohe Stabilität der gesamten Stauvorrichtung.

Die Deckwandung ist vorzugsweise als fest in die Karosserierohbaustruktur integriertes Karosserieteil vorgesehen, das auch als Hutablage bezeichnet wird. Alternativ ist es auch möglich, eine bewegliche, aber formstabile Deckwandung vorzusehen, die beispielsweise bei einem Öffnen einer Heckklappe nach oben geschwenkt werden kann. Besonders vorteilhaft ist es, das Rahmenmodul an einer festen Deckwandung zu befestigen, wie sie bei Stufenheckfahrzeugen als obere Begrenzung des Kofferraumes im Anschluss an einen Kofferraumheckdeckel vorgesehen ist. In diesem oberen Bereich des Kofferraumes ist eine Unterbringung der Stauvorrichtung besonders vorteilhaft, da die Kofferraumöffnung durch das Aufnahmebehältnis nicht beeinträchtigt ist, solange dieses sich in seiner Ruheposition befindet. Die Anordnung des Rahmenmoduls und damit des Aufnahmebehältnisses unterhalb der Deckwandung des Kofferraumes ermöglicht zudem ein Beladen des Kofferraumes im Bereich des Kofferraumbodens, ohne dass das Rahmenmodul oder Aufnahmebehältnis störend wirkt. Durch die teleskopartig ausziehbaren Führungsschienen kann das Aufnahmebehältnis linear beweglich ausgezogen oder in die Ruheposition zurückgeführt werden und weist demzufolge eine Schubladenfunktion auf.

In Ausgestaltung der Erfindung sind in der Deckwandung Aufnahmebereiche vorgesehen, in denen die Befestigungsmittel formschlüssig verankerbar sind. Hierdurch wird eine besonders stabile und sichere Montage des Rahmenmoduls ermöglicht. Die formschlüssige Verankerung gewährleistet eine spielfreie und dauerhafte Befestigung des Rahmenmoduls an der Deckwandung.

In weiterer Ausgestaltung der Erfindung weisen die Befestigungsmittel mehrere zueinander beabstandete Befestigungselemente auf, die wenigstens einen Einhängehaken und wenigstens ein Spannelement, insbesondere ein Bajonettverschlussteil, umfassen. Vorteilhaft weist das Rahmenmodul zwei Einhängehaken an gegenüberliegenden Seiten und davon beabstandet zwei Spannelemente ebenfalls an gegenüberliegenden Seiten auf. Die Einhängehaken dienen dazu, das Rahmenmodul zunächst einzuhängen, um anschließend mittels des wenigstens einen Spannelementes die gewünschte Fixierung des Rahmenmoduls an der Deckwandung zu erzielen. Das wenigstens eine Spannelement dient dazu, das Rahmenmodul in die Montageposition hineinzuspannen, um so eine spielfreie Fixierung unabhängig von Vibrations- oder Rüttelbewegungen, insbesondere während des Fahrbetriebs, zu erzielen. Besonders vorteilhaft ist als Spannelement ein Bajonettverschlussteil vorgesehen, das die gewünschte Spann- und Fixierfunktion durch eine einfache Drehbewegung erreicht.

In weiterer Ausgestaltung der Erfindung sind zwei Einhängehaken als hinteres Befestigungselementepaar und zwei insbesondere drehbewegliche Spannelemente als vorderes Spannelementpaar vorgesehen, die derart gestaltet sind, dass eine spielfreie Fixierung in montierter Position erreicht wird. Diese Ausgestaltung ist insbesondere vorteilhaft bei einem etwa viereckig ausgeführten Rahmenmodul.

In weiterer Ausgestaltung der Erfindung weist das Rahmenmodul ein Rahmengerüst aus zwei Längsträgern, an denen die Führungsschienen angeordnet sind, und aus zwei im Bereich des hinteren Befestigungselementpaares und des vorderen Spannelementpaares angeordneten Querträgern auf. Hierdurch wird eine besonders stabile Gestaltung des Rahmenmoduls erzielt. Vorzugsweise ist das Rahmengerüst aus Leichtmetallprofilen aufgebaut, um das Gewicht der Stauvorrichtung gering zu halten.

In weiterer Ausgestaltung der Erfindung ist das Aufnahmebehältnis als Kunststoffwanne gestaltet, die wenigstens in ihrem Bodenbereich mit mehreren quer- und längsverlaufenden Verrippungen versehen ist. Dadurch weist die Kunststoffwanne eine hohe Steifigkeit auf und kann somit die Stabilität der Gesamtanordnung aus Rahmenmodul, Führungsmittel und Aufnahmebehältnis erhöhen.

In weiterer Ausgestaltung der Erfindung ist die Kunststoffwanne frontseitig mit einer Abschlussblende versehen, die insbesondere einstückiger Teil der Kunststoffwanne ist. Hierdurch ist die Stauvorrichtung optisch in ansprechender Weise in den Kofferraum integrierbar.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in perspektivischer Darstellung eine Stauvorrichtung einer Ausführungsform eines erfindungsgemäßen Kofferraumes, wo- bei sich das Aufnahmebehältnis in seiner Ruheposition befin- det,
- Fig. 2: die Stauvorrichtung nach Fig. 1, wobei die Anordnung der Stauvorrichtung unterhalb einer fahrzeugfesten Deckwandung des Kofferraumes erkennbar ist,
- Fig. 3: die Stauvorrichtung nach Fig. 2, wobei das Aufnahmebehältnis in seine Stauposition ausgezogen ist,
- Fig. 4: eine heckseitige Ansicht des Stauvorrichtung nach den Fig. 1 bis 3,
- Fig. 5: ein Einsatzteil für einen Aufnahmebereich in der Deckwandung, um das Einführen und Sichern eines Einhängehakens der Stauvorrichtung zu ermöglichen und
- Fig. 6: das Einsatzteil nach Fig. 5 in um 180° gedrehter Darstellung.

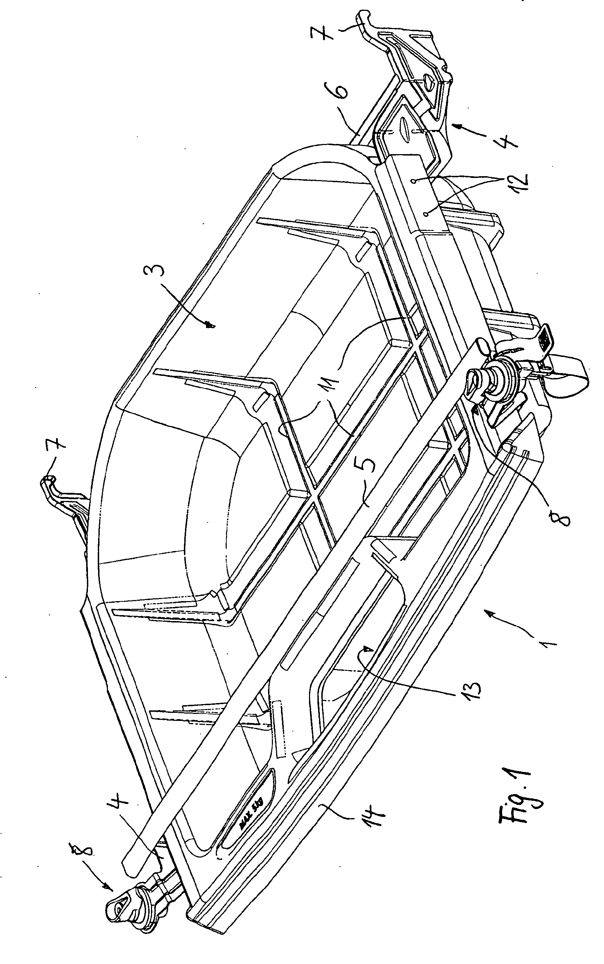

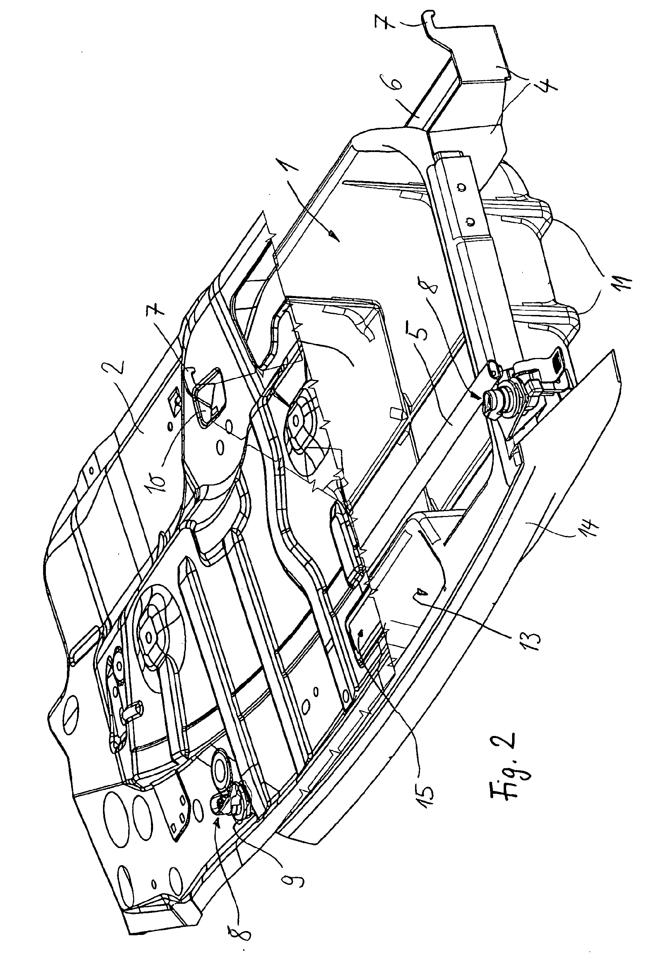

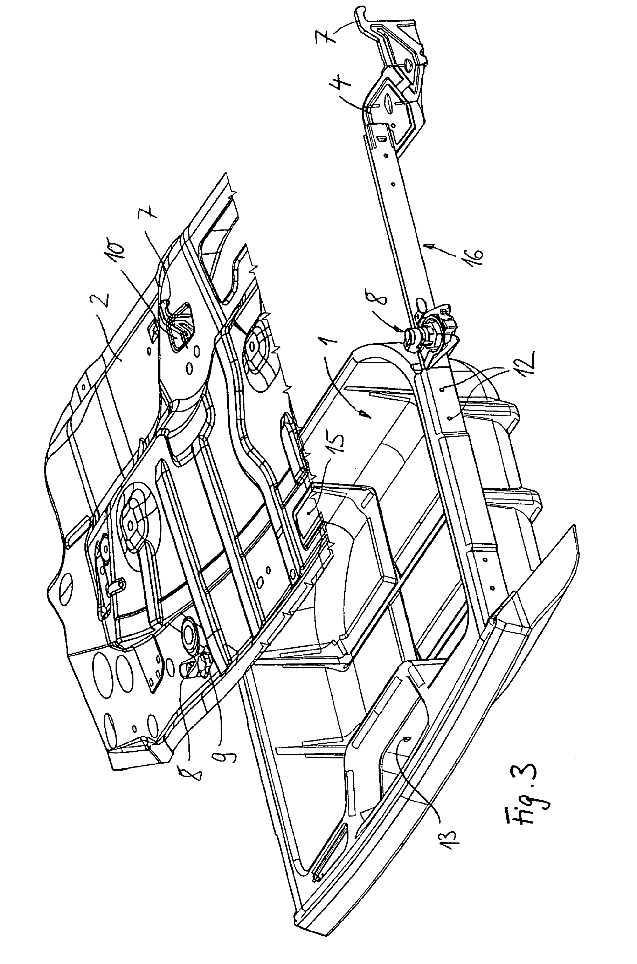

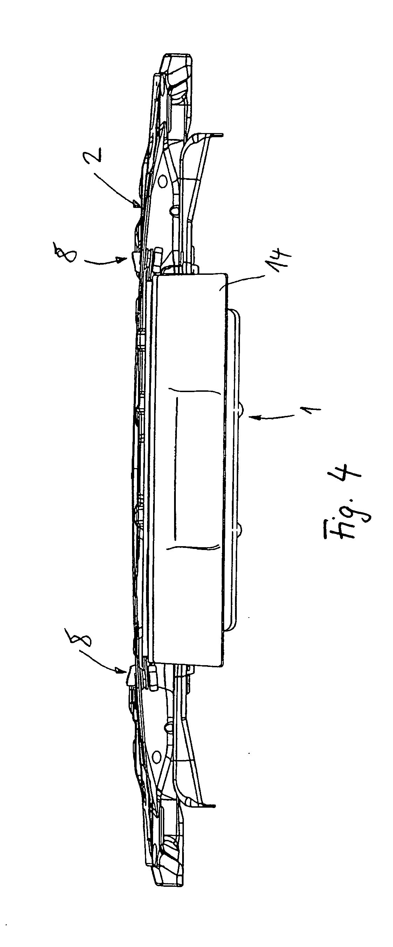

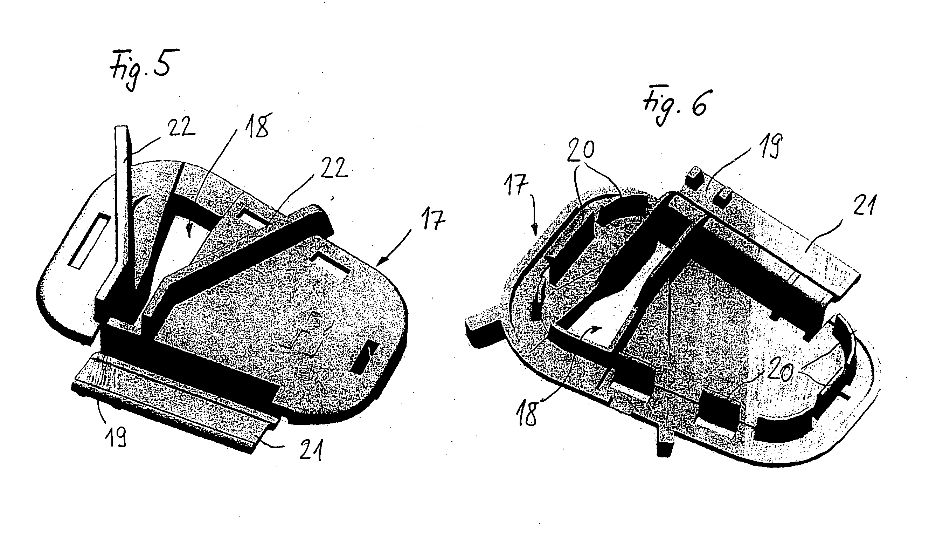

Eine Stauvorrichtung gemäß den Fig. 1 bis 6 ist für einen Kofferraum eines Personenkraftwagens vorgesehen. Der Kofferraum wird in grundsätzlich bekannter Weise nach unten durch einen Kofferraumboden und nach oben durch einen Kofferraumdeckel sowie in Fahrzeuglängsrichtung anschließend an den Kofferraumdeckel durch eine Deckwandung 2 begrenzt. Die Deckwandung 2 stellt ein Karosserierohbauteil dar, das fest in die Karosserierohbaustruktur eingebunden ist. Wie anhand der Fig. 2 und 3 erkennbar ist, ist die fahrzeugfeste Deckwandung 2 mit zwei in Fahrzeugquerrichtung zueinander beabstandeten, in normaler Fahrzeugausrichtung gesehen vorderen Aufnahmebereichen 10 sowie mit zwei hinteren Aufnahmebereichen 9 versehen, die Durchtritte in der Deckwandung 2 darstellen. Die vorderen Aufnahmebereiche sind etwa viereckig ausgeführt. Die hinteren Aufnahmebereiche 9 weisen eine etwa ovale Durchtrittsöffnung auf. In die vorderen Aufnahmebereiche ist gemäß den Fig. 5 und 6 jeweils ein Einsatzteil 17 einsetzbar, das mit einem Einführsteg 21 und mehreren Raststegen 20 versehen ist, die längs der Randkontur des entsprechenden Aufnahmebereiches 10 verlaufen und ein Einrasten des Einsatzteiles 17 in den entsprechenden Aufnahmebereich 10 ermöglichen. Das jeweilige Einsatzteil 17 wird von unten her, d.h. vom Kofferraum aus, in den entsprechenden Aufnahmebereich 10 eingeführt und durch einfaches Eindrücken in diesem eingerastet. Die beiden Einsatzteile 17 für die vorderen Aufnahmebereiche 10 dienen dazu, in nachfolgend näher beschriebener Weise das Einführen und Sichern von Einhängehaken eines Rahmenmodules 4, 5, 6 der Stauvorrichtung zu ermöglichen.

Die Stauvorrichtung 1 weist eine Kunststoffwanne 3 auf, die mit Hilfe von Befestigungsmitteln 12 an ihren gegenüberliegenden Längsseiten mittels jeweils einer Führungsschienenanordnung 16 an dem Rahmenmodul 4 bis 6 linear verschiebbar befestigt ist. Das Rahmenmodul 4 bis 6 weist zwei parallel zu den Führungsschienenanordnungen 16 verlaufende Längsträgerprofile 4 auf, die durch zwei Querträger 5, 6 zu einem viereckigen Rahmen stabil miteinander verbunden sind. Ein vorderer Querträger 6 verläuft etwa auf Höhe der vorderen Einhängehaken 7, die an den Längsträgern 4 angeformt sind und zum Einhängen in die Einsatzteile 17 der vorderen Aufnahmebereiche 10 der Deckwandung 2 dienen. Ein hinterer Querträger erstreckt sich zwischen den hinteren Endbereichen der Längsträger 4 oberhalb der Kunststoffwanne 3 und ist ebenfalls fest mit diesen verbunden. Im Bereich des hinteren Querträgers 5 sind die hinteren Befestigungsmittel 8 an dem Rahmenmodul 4 bis 6 angeordnet, die als Spannelemente in Form von Bajonettverschlussteilen ausgeführt sind. Jedes Spannelement 8 ist an seiner Unterseite mit einem Handgriff und an seiner Oberseite mit einem radial abragenden Exzenterzapfen versehen. Um das Rahmenmodul einschließlich der Führungsschienenanordnungen 16 und der daran befestigten Kunststoffwanne 3 an der Unterseite der Deckwandung 2 befestigen zu können, wird zunächst die gesamte Einheit vom Kofferraum aus derart schräg nach oben gerichtet, dass die Einhängehaken 7 in entsprechende Einführschlitze 18 der Einsatzteile 17 der vorderen Aufnahmebereiche 10 eingeführt werden können. Zentrierschrägen 22 an den Einsatzteilen 17 dienen als Einführhilfe für die Einhängehaken 7. Sobald die Einhängehaken 7 nach oben durch die Einführschlitze 18 hindurchgeführt sind, gleiten die Einhängehaken zwischen zwei Zentriernocken in jedem Einsatzteil 17 über einen Absatz 19 und übergreifen diesen Absatz am vorderen Randbereich des Einführsteges 21. Das übrige Rahmenmodul 4 bis 6 wird während des Einführvorganges im Bereich der Einhängehaken 7 in seinem hinteren Bereich nach oben verschwenkt, wodurch die Exzenterzapfen oder Exzenternocken der Spannelemente 8 in ihrer Demontagenstellung durch die ovalen hinteren Aufnahmebereiche 9 der Deckwandung 2 hindurchgeführt werden können. Durch ein einfaches Verdrehen der Betätigungsgriffe werden die Exzenternocken an jeweils einer entsprechenden Anlaufschräge im Bereich der Oberseite der Deckwandung verspannt und verriegeln somit zwangsläufig das Rahmenmodul 4 bis 6 an der Unterseite der Deckwandung 2. Eine Demontage der Stauvorrichtung und damit des Rahmenmoduls 4 bis 6 erfolgt in entsprechender umgekehrter Weise, indem zunächst die Spannelemente 8 mittels einer Drehung der Betätigungsgriffe gelöst werden, so dass die Spannelemente 8 aus den hinteren Aufnahmebereichen 9 nach unten ausgeführt werden können. Anschließend werden die Einhängehaken 7 aus den vorderen Aufnahmebereichen 10 und aus den vorderen Einsatzteilen 17 wieder herausgenommen.

Wie anhand der Fig. 1 bis 3 erkennbar ist, ist die Kunststoffwanne 3 mit ihren gegenüberliegenden seitlichen Randbereichen auf jeweils einer Führungsschienenanordnung 16 abgestützt und an entsprechend beweglichen Schienenteilen mittels der Befestigungselemente 12, die vorzugsweise als Schraubelemente ausgeführt sind, befestigt. Jede Führungsschienenanordnung 16 ist aus mehreren, teleskopförmig ausziehbaren Schienenteilen zusammengesetzt, die vorzugsweise über Wälz- oder Gleitlagerungen vorzugsweise spielfrei verschiebbar relativ zueinander gelagert sind. Die Kunststoffwanne 3 ist mit mehreren längs- und querverlaufenden Verrippungen 11 versehen, die in dem Bodenbereich der Kunststoffwanne 3 vorgesehen sind und bis in den nach oben gezogenen Wandungsbereich der Kunststoffwanne 3 geführt sind. Die Verrippungen 11 sind vorzugsweise durch entsprechende Tiefziehvorgänge einstückig in der Kunststoffwanne 3 ausgeformt.

Ein querverlaufender, heckseitiger Wandungsbereich der Kunststoffwanne 3 ist mit einer einstückig in die Kunststoffwanne 3 integrierten Abschlussblende 14 versehen, die mit einem von oben nach unten durchgängig offenen Aussparungsbereich 13 versehen ist.

Die Abschlussblende 14 ist einschließlich des Aussparungsbereichs 13 zudem so ausgeführt, dass im Bereich der Abschlussblende 14 und/oder in dem Aussparungsbereich 13 eine Griffmulde oder eine Griffaussparung gebildet ist, die das manuelle Ergreifen der Kunststoffwanne 3 für einen Auszieh- oder Einschubvorgang ermöglicht.

## Patentansprüche

1. Kofferraum eines Kraftfahrzeugs mit einer Stauvorrichtung, die mit einem zwischen einer Ruheposition und einer Stauposition durch Führungsmittel beweglich gelagerten Aufnahmebehältnis versehen ist, wobei die Führungsmittel (16) und das Aufnahmebehältnis (3) an einem Rahmenmodul (4 bis 6) angeordnet sind, das durch werkzeuglos bedienbare Befestigungsmittel (7, 8) lösbar an einem Wandungsabschnitt 2 des Kofferraumes montierbar ist, **dadurch gekennzeichnet, dass** als Wandungsabschnitt eine Deckwandung des Kofferraumens vorgesehen ist, wobei als Deckwandung ein fest in die Karosserierohbaustruktur integriertes Karosserieteil vorgesehen ist, das den Kofferraum nach oben zumindest abschnittsweise begrenzt, und an der das Rahmenmodul 4 bis 6 von unten her befestigbar ist, und dass die Führungsmittel als teleskopartig ausziehbare Führungsschienenanordnungen 16 gestaltet sind.

2. Kofferraum nach Anspruch 1, **dadurch gekennzeichnet, dass** in der Deckwandung (2) Aufnahmebereiche (9, 10) vorgesehen sind, in denen die Befestigungsmittel (7, 8) formschlüssig verankerbar sind.

3. Kofferraum nach Anspruch 1, **dadurch gekennzeichnet, dass** die Befestigungsmittel mehrere zueinander beabstandete Befestigungselemente aufweisen, die wenigstens einen Einhängehaken (7) und wenigstens ein Spannelement (8), insbesondere ein Bajonettverschlussteil, umfassen.

4. Kofferraum nach Anspruch 3, **dadurch gekennzeichnet, dass** zwei Einhängehaken (7) als vorderes Befestigungselementpaar und zwei insbesondere drehbewegliche Spannelemente (8) als hinteres Spannelementpaar vorgesehen sind, die derart gestaltet sind, dass eine spielfreie Fixierung in montierter Position erreicht wird.

5. Kofferraum nach Anspruch 1, **dadurch gekennzeichnet, dass** das Rahmenmodul ein Rahmengerüst aus zwei Längsträgern (4), an denen die Führungsschienenanordnungen (16) vorgesehen sind, und aus zwei im Bereich des vorderen Befestigungselementpaares und des hinteren Spannelementpaares angeordneten Querträgern (5, 6) aufweist.

6. Kofferraum nach einem der vorhergehenden Ansprüche, **dadurch gekennzeichnet, dass** das Aufnahmebehältnis als Kunststoffwanne (3) gestaltet ist, die wenigstens in ihrem Bodenbereich mit mehreren quer- und längsverlaufenden Verrippungen (11) versehen ist.

7. Kofferraum nach einem der vorhergehenden Ansprüche, **dadurch gekennzeichnet, dass** die Kunststoffwanne (3) frontseitig mit einer Abschlussblende (14) versehen ist, die insbesondere einstückiger Teil der Kunststoffwanne ist.

## Claims

1. Vehicle boot of a motor vehicle having a stowage device provided with a receptacle movably mounted by guide means between a rest position and a stowage position, the guide means (16) and the receptacle (3) being arranged on a frame module (4 to 6) detachably fittable to a wall section (2) of the vehicle boot by fastening means (7, 8) operable without tools, **characterized in that** a top wall of the vehicle boot is provided as the wall section where a body part permanently integrated into the body shell structure is provided as the top wall and limits the vehicle boot at least in some sections in the upward direction and to which the frame module (4 to 6) can be fastened from underneath, and **in that** the guide means are designed as telescopically extendable guide rail arrangements (16).

2. Vehicle boot according to Claim 1, **characterized in that** inside the top wall (2) are provided receptacle areas (9, 10) in which the fastening means (7, 8) can be positively anchored.

3. Vehicle boot according to Claim 1, **characterized in that** the fastening means have several fastening elements at a distance from one another and comprising at least one suspension hook (7) and at least one clamping element (8), in particular a bayonet fastening part.

4. Vehicle boot according to Claim 3, **characterized in that** two suspension hooks (7) are provided as the front fastening element pair and two in particular rotatable clamping elements (8) as the rear clamping element pair and are designed such that play-free fixation in the assembled position is achieved.

5. Vehicle boot according to Claim 1, **characterized in that** the frame module has a frame structure of two side members (4) on which are provided the guide rail arrangements (16), and two cross members (5, 6) arranged in the area of the front fastening element pair and the rear clamping element pair.

6. Vehicle boot according to one of the preceding claims, **characterized in that** the receptacle is designed as a plastic tray (3) provided at least in its bottom area with several transversely and longitudinally running ribs (11).

7. Vehicle boot according to one of the preceding claims, **characterized in that** the plastic tray (3) is provided on the front with a closing cover (14) which is in particular a single-piece part of the plastic tray.

## Revendications

1. Coffre d'un véhicule avec un dispositif de rangement qui est muni d'un récipient logé de manière mobile par des moyens de guidage entre une position de repos et une position de rangement, sachant que les moyens de guidage (16) et le récipient (3) sont disposés sur un module de cadre (4 à 6) qui peut être monté de manière amovible sur une section de paroi 2 du coffre au moyen d'organes de fixation (7, 8) pouvant être actionnés sans outil (7, 8), **caractérisé en ce qu'**est prévue, en tant que section de paroi, une paroi supérieure du coffre, sachant qu'est prévue, en tant que paroi supérieure, une partie de carrosserie intégrée de manière inamovible dans la structure de la coque et qui délimite au moins partiellement le coffre vers le haut, et à laquelle le module de cadre 4 à 6 peut être fixé par le bas, et que les moyens de guidage sont conçus sous forme de systèmes de rails de guidage 16 extensibles de manière télescopique.

2. Coffre selon la revendication 1, **caractérisé en ce que** dans la paroi supérieure (2) sont prévues des zones de fixation (9, 10) dans lesquelles les organes de fixation (7, 8) peuvent être ancrés par complémentarité de forme.

3. Coffre selon la revendication 1, **caractérisé en ce que** les organes de fixation présentent plusieurs éléments de fixation distants les uns des autres, qui comprennent au moins un crochet de suspension (7) et au moins un élément de serrage (8), en particulier une pièce à emboîtement à baïonnette.

4. Coffre selon la revendication 3, **caractérisé en ce que** sont prévus deux crochets de suspension (7) comme paire d'éléments de fixation antérieure et deux éléments de serrage (8) en particulier pivotants comme paire d'éléments de serrage postérieure, qui sont conçus de manière telle qu'une fixation exempte de jeu est obtenue en position montée.

5. Coffre selon la revendication 1, **caractérisé en ce que** le module de cadre présente une ossature constituée de deux longerons (4), sur lesquels sont prévus les systèmes de rails de guidage (16), et de deux traverses (5, 6) situées dans la zone de la paire d'éléments de fixation antérieure et de la paire d'éléments de serrage postérieure.

6. Coffre selon l'une des revendications précédentes, **caractérisé en ce que** le récipient est conçu sous forme de cuve en matière plastique (3) qui est munie, au moins sur son fond, de plusieurs nervures (11) transversales et longitudinales.

7. Coffre selon l'une des revendications précédentes, **caractérisé en ce que** la face avant de la cuve en matière plastique (3) est munie d'une bordure (14) qui forme en particulier une seule pièce avec la cuve en matière plastique.
